(19) Europäisches Patentamt
European Patent Office
Office européen des brevets

(11) **EP 2 632 075 B1**

(12) **EUROPEAN PATENT SPECIFICATION**

(45) Date of publication and mention
of the grant of the patent:
**02.08.2017 Bulletin 2017/31**

(51) Int Cl.:
***H04L 5/00*** *(2006.01)*

(21) Application number: **12305232.6**

(22) Date of filing: **27.02.2012**

(54) **Carrier aggregation scheduler for LTE-a fairness scheduling**

Trägeraggregationsplaner für die LTE-a-Fairnessplanung

Programmateur d'agrégation de support pour planification d'équité LTE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**28.08.2013 Bulletin 2013/35**

(73) Proprietor: **ALCATEL LUCENT**
**92100 Boulogne-Billancourt (FR)**

(72) Inventors:
• **Ben Rached, Nidham**
**91620 Nozay (FR)**
• **De Lannoy, Arnaud**
**91620 Nozay (FR)**
• **Cayla Stéphane**
**91620 Nozay (FR)**

(74) Representative: **Berthier, Karine et al**
**Alcatel-Lucent International**
**148/152, route de la Reine**
**92100 Boulogne-Billancourt (FR)**

(56) References cited:
• **YUANYE WANG ET AL: "Utility Maximization in LTE-Advanced Systems with Carrier Aggregation", VEHICULAR TECHNOLOGY CONFERENCE (VTC SPRING), 2011 IEEE 73RD, IEEE, 15 May 2011 (2011-05-15), pages 1-5, XP031896894, DOI: 10.1109/VETECS.2011.5956494 ISBN: 978-1-4244-8332-7**

**Description**

FIELD OF THE INVENTION

The present invention relates to scheduling methods for throughput fairness control in LTE-Advanced (LTE-A) system with carrier aggregation.

BACKGROUND OF THE INVENTION

In order to meet the ever evolving demand for wireless broadband services from fast-growing mobile users equipped with mobile devices of different technical capabilities, optimal and efficient use of frequency spectrum is more than ever of current interest.

In this regard, 3GPP has recently proposed, as part of LTE Release 10, Carrier Aggregation (CA) technology (also known as multi-carrier-operation) to support very-high-data-rate transmissions over wide frequency bandwidths, while preserving backward compatibility to legacy systems.

In fact, LTE-A carrier aggregation allows eNodeB to aggregate two or more carriers of different bandwidths - belonging to a single frequency band or different frequency bands - for a single User Equipment (UE) so as to provide maximum flexibility in utilizing the scarce radio spectrum. Hence, with CA technology, it is possible to schedule a UE on multiple carriers simultaneously, permitting to substantially increasing the peak throughput per UE (around double with two carriers of same bandwidth).

Moreover, as more than one bearer may be established between a UE and one or more gateways of different Packet Data Network (PDN), the carrier aggregation scheduler is responsible for ensuring fairness and Quality of Service (QoS) among all these bearers. By bearer is intended to mean, here, an end-to-end tunnel (i.e. a logical channel, or more generally an IP packet flow) associated with a QoS. For example, a user may be engaged in a voice (VoIP) call (a first bearer) and concurrently performing web browsing (a second bearer), while at the same time a second user is engaged in a streaming session (a third bearer) and performing a FTP transfer (a fourth bearer). Accordingly, a multi-bearers scheduling algorithm is required for carrier aggregation scheduling and more particularly a per-bearer and per-carrier fairness metric is needed for scheduling decision making.

It is worth reminding that the fairness metric $M_i$ per-bearer $i$, currently used in LTE Release 8 and 9 (i.e. without carrier aggregation) scheduler, is as follows

$$\text{For bearer } i, \ M_i = \frac{w_i(t)}{\Omega_i^{\alpha}(t)} \rho(t)$$

wherein $w_i(t)$, $\Omega_i(t)$, and $\rho(t)$ are, respectively, the QoS priority weight and the averaged spectral efficiency of the bearer $i$ on the unique used carrier, and the instantaneous shared spectral efficiency on the unique used carrier. The parameter $\alpha$ controls the fairness of the scheduling policy and can be tuned to any point between

-   1: proportional fair scheduler (i.e. equity in resource allocation) ;
-   0.5: minimum fairness;
-   2: maximum fairness (i.e. equity in throughput).

For LTE-A UE carrier aggregation, a further fairness scheduling algorithm (LTE Release 10) defines the following fairness metric for scheduling decision making:

$$\text{For each bearer } i \text{ of each UE, } M_i = w_i(t) \frac{\rho_n(t)}{\sum_{n=0}^{N} \Omega_{n,i}^{\alpha}(t)}$$

where

-   $M_i$ is the metric for bearer $i$ of a UE ;
-   $w_i$ is the QoS priority for bearer $i$ of that UE ;
-   $Q_{n,i}(t)$ is the average spectral efficiency for bearer $i$ on aggregated carrier $n$ of that UE;
-   $\rho_n(t)$ is the instantaneous spectral efficiency on aggregated carrier $n$ of that UE; and
-   $\alpha$ controls the fairness of the scheduling policy.

The above fairness metric is typically used for CA per sector (CA-sector), a sector being composed of N cells on different carrier frequencies having similar coverage area. A simple criterion for two cells to belong to a same CA-sector is geographical co-localization of the Downlink (DL) antennas.

In the above LTE-A Release 10 fairness metric, all UE metrics of a given CA-sector are computed inside the CA-sector they belong to. Also, all UE are weighted inside each carrier of the CA-sector in a proportional fair manner.

CA-sector fairness improves the performances/capacity of all cells of the CA-sector thanks to CA UE (i.e. UE supporting CA) off-loading their primary cells as their traffic goes over their secondary cells.

In particular, according to the above fairness metric, all LTE UEs, regardless whether they are compatible with CA or not, are fairly served by the CA scheduler.

However, this may be problematic especially during initial CA technology deployment. In fact, for initial deployment, subscribers buying expensive CA UEs may claim to their network operators to experience better performances than with "legacy" LTE UEs. This is not achievable with a fairness per CA-sector when resources are equally shared among UEs. Moreover, due to low CA penetration rate in initial releases, the cells performances/capacity gain is minimal. The inability of a network operator to meet his subscribers' expectation is usually severely criticized.

An object of the present invention is to promote the deployment of CA technology.

Another object of the present invention is to adapt CA schedulers to transitional phase wherein both LTE UEs supporting CA technology (i.e. LTE-A UEs, or CA UEs) and LTE UEs non supporting CA technology (i.e. legacy LTE UEs) are in the possession of subscribers of an network operator (preferably, when the number of LTE-A UEs is relatively small compared to the number of LTE UEs).

YUANYE WANG ET AL: "Utility Maximization in LTE-Advanced Systems with Carrier Aggregation", VEHICULAR TECHNOLOGY CONFERENCE (VTC SPRING), 2011 IEEE, 73RD, IEEE, 15 May 2011 (2011-05-15), pages 1-5, discloses a mathematical model of the log-measure utility in an LTE-Advanced system, and give proof that our previously developed cross-CC Proportional Fair (PF) packet scheduler maximizes this utility.

## SUMMARY

The present invention is directed to addressing the effects of one or more of the problems set forth above. The following presents a simplified summary of the invention in order to provide a basic understanding of some aspects of the invention. This summary is not an exhaustive overview of the invention. It is not intended to identify key of critical elements of the invention or to delineate the scope of the invention. Its sole purpose is to present some concepts in a simplified form as a prelude to the more detailed description that is discussed later.

The present relate to a method for carrier aggregation scheduling among a plurality of bearers comprising a computation step of computing a fairness metric per-bearer for scheduling decision making, said fairness metric including a compensation step of compensating, with a carrier compensation factor, of at least an aggregated carrier.

The present invention further relates to a carrier aggregation scheduler adapted to perform the above method.

While the invention is susceptible to various modification and alternative forms, specific embodiments thereof have been shown by way of example in the drawings. It should be understood, however, that the description herein of specific embodiments is not intended to limit the invention to the particular forms disclosed.

It may of course be appreciated that in the development of any such actual embodiments, implementation-specific decisions should be made to achieve the developer's specific goal, such as compliance with system-related and business-related constraints. It will be appreciated that such a development effort might be time consuming but may nevertheless be a routine understanding for those or ordinary skill in the art having the benefit of this disclosure.

## BRIEF DESCRIPTION OF THE DRAWINGS

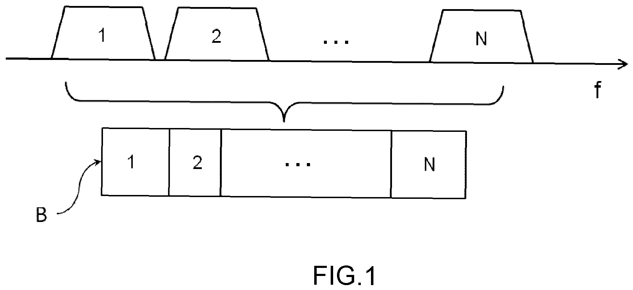

The above and other objects and advantages of the invention will become apparent from the detailed description of preferred embodiments, considered in conjunction with the accompanying drawing, in which Fig.1 1 is a schematic diagram illustrating carrier's aggregation.

## DESCRIPTION OF PREFERRED EMBODIMENTS

As illustrative example, and with reference to figure 1, a plurality of LTE carriers 1, 2, ... N (N being an integer equal or greater than 2) are aggregated so as to support a wider system bandwidth B (for example 100 MHz). Notably, such carrier aggregation may be across a plurality of contiguous, non-contiguous, or a combination of contiguous and non-contiguous frequency bands used by an eNodeB (i.e. a base station).

Bearers of UEs (notably, including LTE-A UEs and LTE UEs) connected to the eNodeB are served by scheduled aggregated carriers 1, 2, ... N with per-carrier control. In other words, rather than considering equal sharing of carriers (proportional fairness) among all bearers, a fairness metric for carrier aggregation scheduling is proposed to control how much bandwidth (throughput) a bearer can get per each carrier.

Accordingly, a LTE fairness metric parameterized with a tunable carrier compensation factor $\beta_m$ is defined as follows

$$M_{i,n} = w_i(t) \frac{\rho_n(t)}{\left(\Omega_{n,i}(t) + \sum_{m=1,m\neq n}^{m=N} \beta_m . \Omega_{m,i}(t)\right)^\alpha}$$

Where

- $M_{i,n}$ is a metric for bearer $i$ of a UE on aggregated carrier $n$ ;
- $w_i(t)$ is the QoS priority weight for bearer $i$ of that UE ;
- $\Omega_{n,i}(t)$, $\Omega_{m,i}(t)$ are the average spectral efficiency for bearer $i$ on aggregated carrier $n$ and $m$ of that UE;
- $\rho_n(t)$ is the instantaneous spectral efficiency on aggregated carrier $n$ of that UE;
- $\beta_m$ is the carrier compensation factor for carrier $m$, $\beta_m$ being in [0,1]
- $\sum_{m=1,m\neq n}^{m=N} \beta_m . \Omega_{m,i}(t)$ is the sum of the $N$ aggregated carriers excluding the carrier $n$ ($n$ being in [1,$N$]) ;
- $\alpha$ controls the fairness of the scheduling policy.

In fact, in the above fairness metric, the contribution of each one of the N-1 secondary carriers is compensated with a factor $\beta_m$. The weight factor for the primary carrier $n$ is equal to the unity.

Accordingly, the N carriers may be gainfully aggregated to be scheduled differently for one bearer than for another. In particular, depending on the carrier compensation factor $\beta_m$ value, LTE-A UE as well as LTE UE may be simultaneously managed by the eNodeB scheduler.

A non-null carrier compensation factor ensures a high throughputs per-bearer (i.e. per-service) to LTE-A UEs, in respect with legacy ones for which the compensation factor may be set to zero. In particular, more attention may be paid to particular bearers of LTE-A UEs, notably those relative to real-time applications such as VoIP or video-conferencing where a certain minimum throughput must be guaranteed. Therefore, the above fairness metric enables carrier aggregation scheduling to LTE UEs as well as LTE-A UEs, while promoting in a tunable way LTE-A ones.

Technical capabilities of UE including information on UE compatibility with CA technology, such as the number and the bandwidth of carriers that the UE supports, are taken into account to determine the carrier compensation factor.

Persons skilled in the art will readily recognize that UE CA compatibility, average spectral efficiency for a bearer, and the instantaneous spectral efficiency on a given aggregated carrier may be obtained either by direct measurement at the eNodeB, via a feedback signaling channels, or via a combination of both.

It is worth noting that the carrier compensation factor may be regularly changed (converging towards 1) as the number of LTE-A UEs becomes large. When there is no LTE UE under the control of an eNodeB, its carrier aggregation scheduler may adopt for a carrier aggregation factor equal to the unity for all the aggregated carriers.

It is to be noted that a carrier compensation factor equal to 1 leads to the conventional fairness metric.

Broadly, the above carrier aggregation scheduling method and system may be extended to other use cases with non-localized DL antennas and potentially two different eNodeB sectors. To that end, means for synchronization and coordination between the cells belonging to the same CA-sector but to different eNodeB sectors may be deployed. In particular, inter-scheduler communication means for scheduling fairness control among UEs located in different cells belonging to the same CA-sector but to different eNodeB sectors have to be deployed.

Based on the available measurement information (QoS priority weight $w_i(t)$, average spectral efficiency $\Omega_{n,i}(t)$, $\Omega_{m,i}(t)$, instantaneous spectral efficiency $\rho_n(t)$) and tuned parameter settings (carrier compensation factor $\beta_m$, policy scheduling fairness parameter $\alpha$), the eNodeB carrier aggregation scheduler computers, for each bearers $i$ of a UE under its control, the fairness metric $M_{i,n}$ on aggregated carrier $n$. Then, aggregated carriers 1, 2, N and scheduled among bearers $i$ according to the fairness metric $M_{i,n}$.

Advantageously, the above described carrier aggregation scheduling method and carrier aggregation scheduler

- provide network operators with functionalities to control their network utilization without much more overhead or complexity to the network. In fact, by adjusting the carrier compensation factor for already established, or oncoming bearers it is possible to offload cells and redistribute network load over different cells;
- manage at the same time both LTE UEs and LTE-A UEs;
- control how much bandwidth (throughput) a UE gets across all carriers as well as controls how much bandwidth a UE gets per each carrier.

**Claims**

1. A method for carrier aggregation scheduling among a plurality of bearers comprising a computation step of computing a fairness metric per-bearer for scheduling decision making, **characterized in that** the computation step of said fairness metric includes a compensation step of compensating, with a carrier compensation factor between 0 and 1, the average spectral efficiency contribution of a bearer of an aggregated carrier to the metric and wherein all except one of the aggregated carriers are compensated with the carrier compensation factor,
   wherein the bearer is a bearer of a user equipment supporting carrier aggregation, and
   wherein the carrier compensation factor is strictly superior to zero and strictly inferior to one.

2. The method of claim 1 , wherein the fairness metric is as follows

$$M_{i,n} = w_i(t) \frac{\rho_n(t)}{\left(\Omega_{n,i}(t) + \sum_{m=1, m \neq n}^{m=N} \beta_m \cdot \Omega_{m,i}(t)\right)^\alpha}$$

Where

   - $M_{i,n}$ is a metric for bearer $i$ of a user equipment on aggregated carrier $n$ ;
   - $w_i(t)$ is the QoS priority weight for bearer $i$ of that use equipment;
   - $\Omega_{n,i}(t)$, $\Omega_{m,i}(t)$ are the average spectral efficiency for bearer $i$ on aggregated carrier $n$ and $m$ of that user equipment;
   - $p_n(t)$ is the instantaneous spectral efficiency on aggregated carrier $n$ of that user equipment;
   - $\beta_m$ is the carrier compensation factor for carrier $m$, $\beta_m$ being in [0,1];
   - $\sum_{m=1, m \neq n}^{m=N} \beta_m \cdot \Omega_{m,i}(t)$ is the sum of the N aggregated carriers excluding the carrier $n$, $n$ being in [1,N] ;
   - $\alpha$ controls the fairness of the scheduling policy.

3. A scheduler programmed for carrier aggregation scheduling among a plurality of bearers according to the method as claimed in preceding claims 1 to 2.

**Patentansprüche**

1. Verfahren für die Zeitplanung der Trägerfrequenzaggregation aus einer Vielzahl von Trägern, einen Berechnungsschritt des Berechnens einer Fairnessmetrik pro Träger für die Zeitplanung der Entscheidungen umfassend, **dadurch gekennzeichnet, dass** der Berechnungsschritt besagter Fairnessmetrik einen Kompensationsschritt der Anwendung eines Trägerkompensationsfaktors zwischen 0 und 1 zum Kompensieren des durchschnittlichen Bandbreiteneffizienzbeitrags eines Trägers einer aggregierten Trägerfrequenz zu der Metrik umfasst, und wobei alle außer einer der aggregierten Trägerfrequenzen mit dem Trägerkompensationsfaktor kompensiert werden,
   wobei der Träger ein Träger eines Benutzergeräts ist, der die Trägerfrequenzaggregation unterstützt, und
   wobei der Trägerkompensationsfaktor grundsätzlich größer null und grundsätzlich kleiner eins ist.

2. Das Verfahren nach Anspruch 1, wobei die Fairnessmetrik folgender Formel entspricht

$$M_{i,n} = w_i(t) \frac{\rho_n(t)}{\left(\Omega_{n,i}(t) + \sum_{m=1, m \neq n}^{m=N} \beta_m \cdot \Omega_{m,i}(t)\right)^\alpha}$$

Wobei

   - $M_{i,n}$ einer Metrik für Träger $i$ eines Benutzergeräts auf der aggregierten Trägerfrequenz $n$ entspricht;
   - $w_i(t)$ der prioritären QoS-Gewichtung des Trägers $i$ dieses Benutzergeräts entspricht;
   - $\Omega_{n,i}(t)$, $\Omega_{m,i}(t)$ für die durchschnittliche Bandbreiteneffizienz für Träger $i$ auf der aggregierten Trägerfrequenz $n$ und $m$ dieses Benutzergeräts stehen;
   - $\rho_n(t)$ für die momentane Bandbreiteneffizienz auf der aggregierten Trägerfrequenz $n$ dieses Benutzergeräts

steht;

- $\beta_m$ für den Trägerkompensationsfaktor für Trägerfrequenz m steht, wobei $\beta_m$ [0,1] beträgt;

- $\sum_{m=1,m\neq n}^{m=N} \beta_m \cdot \Omega_{m,i}(t)$ die Summe der N aggregierten Trägerfrequenzen ausschließlich Trägerfrequenz $n$ ist, wobei $n$ [1 ,N] beträgt;

- $\alpha$ die Fairness der Zeitplanungsrichtlinie steuert.

**3.** Zeitplaner, programmiert für die Zeitplanung der Trägerfrequenzaggregation zwischen einer Vielzahl von Trägern gemäß dem Verfahren aus den vorangehenden Ansprüchen 1 bis 2.

**Revendications**

**1.** Procédé de planification d'agrégation de porteuses parmi une pluralité de supports comprenant une étape de calcul d'une mesure d'équité par support pour planifier une prise de décision, **caractérisé en ce que** l'étape de calcul de ladite mesure d'équité comprend une étape de compensation, avec un facteur de compensation de porteuse entre 0 et 1, de la contribution d'efficacité spectrale moyenne d'un support d'une porteuse agrégée à la mesure et dans lequel toutes les porteuses agrégées sauf une sont compensées par le facteur de compensation de porteuse, dans lequel le support est un support d'un équipement utilisateur prenant en charge l'agrégation de porteuses, et dans lequel le facteur de compensation de porteuses est strictement supérieur à zéro et strictement inférieur à un.

**2.** Procédé selon la revendication 1, dans lequel la mesure d'équité est comme suit

$$M_{i,n} = w_i(t) \frac{\rho_n(t)}{\left(\Omega_{n,i}(t) + \sum_{m=1,m\neq n}^{m=N} \beta_m \cdot \Omega_{m,i}(t)\right)^{\alpha}}$$

où

- $M_{i,n}$ est une mesure pour le support $i$ d'un équipement utilisateur sur la porteuse agrégée n ;
- $w_i(t)$ est le poids de priorité QoS pour le support $i$ de cet équipement utilisateur ;
- $\Omega_{n,i}(t)$, $\Omega_{m,i}(t)$ sont l'efficacité spectrale moyenne pour le support $i$ sur la porteuse agrégée $n$ et $m$ de cet équipement utilisateur ;
- $\rho_n(t)$ est l'efficacité spectrale instantanée sur la porteuse agrégée $n$ de cet équipement utilisateur ;
- $\beta_m$ est le facteur de compensation de porteuse pour la porteuse $m$, $\beta_m$, étant dans [0,1] ;

- $\sum_{m=1,m\neq n}^{m=N} \beta_m \cdot \Omega_{m,i}(t)$ est la somme des N porteuses agrégées à l'exception de la porteuse n, n étant dans [1 ,N] ;

- $\alpha$ contrôle l'équité de la politique de planification.

**3.** Planificateur programmé pour la planification d'agrégation de porteuses parmi une pluralité de supports conformément au procédé selon les revendications précédentes 1 et 2.

FIG.1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Utility Maximization in LTE-Advanced Systems with Carrier Aggregation. **YUANYE WANG et al.** VEHICULAR TECHNOLOGY CONFERENCE (VTC SPRING), 2011 IEEE, 73RD. IEEE, 15 May 2011, 1-5